# EUROPEAN PATENT APPLICATION

(11) **EP 1 467 553 A2**
(43) Date of publication of application: **13.10.2004**
(21) Application number: 03257965.8
(22) Date of filing: 17.12.2003
(51) Int. Cl.: H04N 1/407

(54) **Document scanning apparatus with white reference**

(30) Priority: 07.04.2003 KR 2003021554
(71) Applicant: Samsung Electronics Co., Ltd., Suwon-si, Gyeonggi-do 442-742 (KR)
(72) Inventor: Nam, Dong-su, Suwon-si Gyeonggi-do (KR)
(74) Representative: Geary, Stuart Lloyd

(57) **Abstract**

An image scanning unit includes an image sensor unit (111) disposed along a document delivery path and having an image scanning surface over which a document travels, the image scanning surface opposing a first surface of the document, a white member which contacts a second side opposing the first side of the document and to urge the document toward the image sensor unit (111), a surface of the white member opposing the image sensor unit being white in color, and a drive roller (130) disposed along the document delivery path adjacent to the white member, delivering the document between the image sensor unit (111) and the white member, and contacting the second side of the document.

## Description

The present invention relates to a document scanning apparatus comprising an image sensor and a reference white member aligned with the sensor across a document path.

An image scanning apparatus such as, for example, a facsimile machine scans documents, which are fed along a document transport path, using an image sensor disposed on or near the document transport path. The image sensor outputs an electrical signal that represents an image of the document. To calibrate the image sensor, it is known to provide a white roller or a white bar opposite to the scanning surface of the image sensor to provide the image sensor with a reference white level or value.

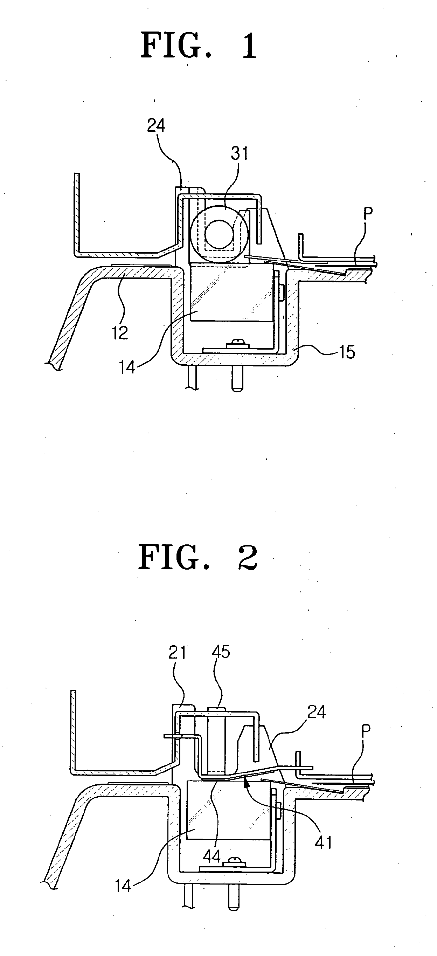

Figure 1 shows a conventional scanning apparatus using a white roller and Figure 2 shows another conventional scanning apparatus using a white bar. The scanning apparatuses of Figures 1 and 2 are examples of the conventional scanning apparatus disclosed in JP-A-11-41426.

Referring to Figure 1, the conventional scanning apparatus has an image sensor 14 disposed in a channel 15 formed by a document guide 12. A white roller 31 is rotatably disposed above the image sensor 14. The white roller 31 is supported by a supporting member 24 and may serve as a document transport roller such as a drive roller. That is, the white roller 31 can be used to move the document P at a speed suitable for sensing by the image sensor 14. The white circumferential surface of the white roller 31 provides a reference white for the sensor 14. The surface of the white roller 31 is substantially uniformly coloured white such that as the white roller 31 rotates the reference white is unchanging. The white roller 31 is generally formed of a white rubber material. The white roller 31 may also function to discharge scanned documents. However, a separate discharge roller can be provided for discharging documents.

The aforementioned arrangement is not without disadvantages. For example, in the above-described structure, the white roller 31 can easily become soiled. When the image sensor 14 scans an image using a soiled white roller 31 to provide the reference white level deviations in image level occur. When this happens, problems such as left/right or partial deviations of a printed image occur. Also, cleaning a soiled white roller 31 involves partial disassembly of the scanning apparatus and the use of cleaning agents such as alcohol. As a result, the user experiences inconvenience as a result of the maintenance work on the image scanning apparatus.

Figure 2 shows another conventional arrangement of a image scanning apparatus, which addresses the shortcomings of the above conventional white roller 31 arrangement. The scanning apparatus has a white bar 41 in place of the white roller 31 (shown in Figure 1). The white bar 41 is supported by a supporting member 21 and is urged toward the image sensor 14 by an elastic member 45 so that the white strip 41 faces the image sensor 14 at a predetermined distance. A white strip 44 is located on the underside of the white bar 41 for providing the image sensor 14 with a reference whiteness level or value. The white bar 41, unlike the white roller 31, is not easily soiled, since the white strip 41 does not come into contact with the document P and is formed of a hard material such as steel and/or PVC to prevent abrasion and distortion thereof. Therefore, a structure having a white strip 41 overcomes the aforementioned disadvantages of the conventional white roller 31.

However, while the white strip 41 arrangement shown in Figure 2 does not suffer from many of the disadvantages of the arrangement of Figure 1, the white roller 31 can control the transport speed of the document and can move the document, whereas the white strip 41 cannot. Thus, an additional drive roller is required when using the white strip 41. In other words, although not shown in Figure 2, a drive roller is disposed between the image sensor 14 and an automatic document feeder (ADF) roller and an idler roller is disposed to rotate and contact the drive roller. Therefore, the drive roller controls the transport speed of a paper sheet picked up by the ADF roller.

However, if the drive roller and the idler roller are employed as described above, the scanning apparatus is larger and more expensive to manufacture than is desirable.

In addition, as the distance between the drive roller and the scanning point of the image sensor 14 is increased, the document skew error range, the transport speed and the transverse deviation increase.

A document scanning apparatus, according to the present invention, is characterised by a document driving roller located beside the reference white member.

If the reference white member is partially interposed between a part of the roller and the document path, the point where the roller drivingly contacts a document can be very close to the reference white member. This configuration may be achieved by the apparatus including a channel member extending transversely across the document path, with the reference white member comprising part of the outer surface of the floor of said channel member, at least, and the roller projecting through an aperture in said channel member into the document path. However, any strip-like element that can be positioned so that it can be overhung by the roller.

Other optional and preferred features are set out in claims 4 to 31 appended hereto.

An embodiment of the present invention will now be described, by way of example, with reference to Figures 3 to 9 of the accompanying drawings in which:-
Figures 1 and 2 are sectional views schematically showing conventional arrangements of respective image scanning apparatuses;
Figure 3 is a sectional view showing an image scanning apparatus according to the present invention;
Figure 4 is a perspective view schematically showing the image scanning apparatus of Figure 3;
Figure 5 is a sectional view showing a drive roller being engaged with the cover of the image scanning apparatus of Figure 3;
Figure 6 is a perspective view schematically showing a cover of the image scanning apparatus of Figure 3;
Figure 7 is a perspective view showing an image sensor unit of the image scanning apparatus of Figure 3;
Figure 8 is a perspective view showing a white member of the image scanning apparatus of Figure 3; and
Figure 9 is a perspective view showing the drive roller of the image scanning apparatus of Figure 3.

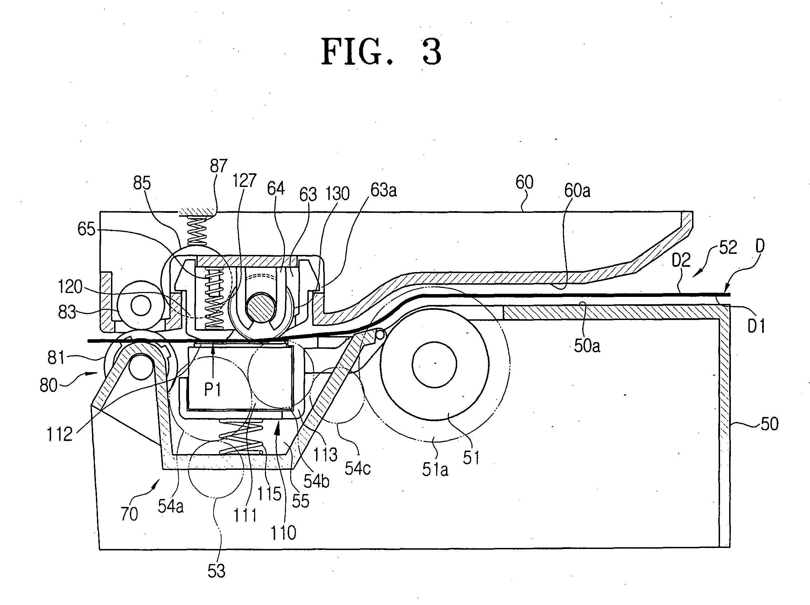

Referring to Figure 3, a image scanning apparatus a main body 50, an openable cover 60 connected to an upper portion of the main body 50, a pickup roller 51 disposed in the main body 50 for feeding a document sheet by sheet, an image scanning unit 70 for delivering the document at a predetermined speed and for scanning the document to obtain image data and a discharging unit 80 for discharging the scanned document.

A document D is delivered along a transport path which is formed between the topside 50a of the main body 50 and the underside 60a of the cover 60.

The pickup roller 51 separates a sheet, from the stack of sheet that for a multipage document in document feeder 52 and moves each sheet toward the scanning unit 70.

As shown in Figure 3, the main body 50 has a drive motor 53 for driving the pickup roller 51. The power generated by the drive motor 53 is transferred to a gear 51a of the pickup roller 51 through a plurality of connecting gears 54a, 54b, 54c.

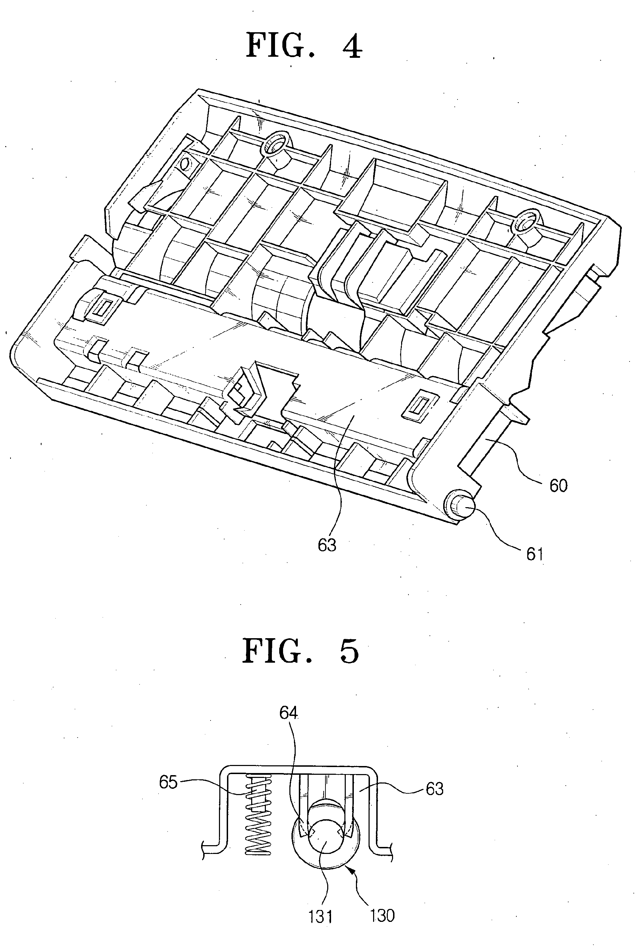

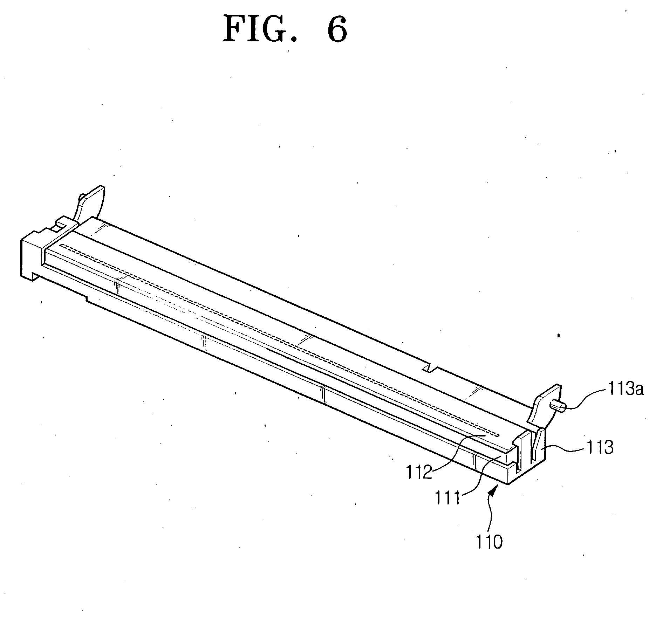

The cover 60 is pivotably connected to the upper portion of the main body 50 and can pivot between open and closed positions (illustrated in closed position). Accordingly, a stubby pin 61 is provided at one end of the cover 60 (shown in Figure 5). In addition, the cover 60 has an accommodating portion 63 for accommodating a drive roller 130 and a white member 120 which is described in detail below. Also, on an inner wall of the accommodating portion 63, as shown in Figure 6, there are provided a shaft holder 64 for rotatably supporting the drive roller 130 and a supporting boss 65 for locating an elastic member 127. The shaft holder 64 comprises two arms. There is a gap between the arms through which the shaft 131 of the drive roller 130 can be pushed, temporarily deforming the arms in the process. A lubricant such as, for example, grease, may be provided between the shaft holder 64 and the shaft 131 to reduce the friction therebetween.

The image scanning unit 70 comprises an image sensor unit 110 disposed in the main body 50, a white member 120 aligned with the image sensor unit 110 and a drive roller 130. The image sensor unit 110 is of a conventional type well-known for scanning documents to produce images thereof.

The image sensor unit 110 includes an image sensor 111, a transparent glass plate 112 disposed on the upper surface of the image sensor 111, so as to contact the underside D1 of a document D fed along the document transport path, and a sensor holder 113 for supporting the image sensor 111 thereon.

Referring now to Figure 6, the image sensor 111 is seated, and thus supported on the sensor holder 113. The image sensor 111 is exposed through the transparent plate 112. An contact image sensor (CIS), by way of a non-limiting example, may be used as the image sensor 111. The sensor holder 113 is moveable upward and downward about one end of a hinge shaft 113a. The sensor holder 113 is accommodated in a sensor mounting unit 55 of the main body 50. Also, an elastic member 115 is disposed at the bottom of the sensor holder 113 to urge the image sensor 110 upwardly, i.e. toward the white member 120 and the drive roller 130.

The white member 120 is aligned with the image sensor unit 110 and faces the top surface D2 of a document D being fed through the apparatus. More specifically, the white member 120 is disposed at a position aligned with a scanning point P1 of the image sensor unit 110. The white member 120 corresponds in length and width to the accommodating portion 63 of the cover 60 and is disposed in the accommodating portion 63. The image sensor unit 110 scans documents D being fed through the apparatus and the white member 120 provides a reference white value. The white member 120 may be partially coated in white so that the area actually sensed by the image sensor 111 is white or the white member 120 may be formed from white material.

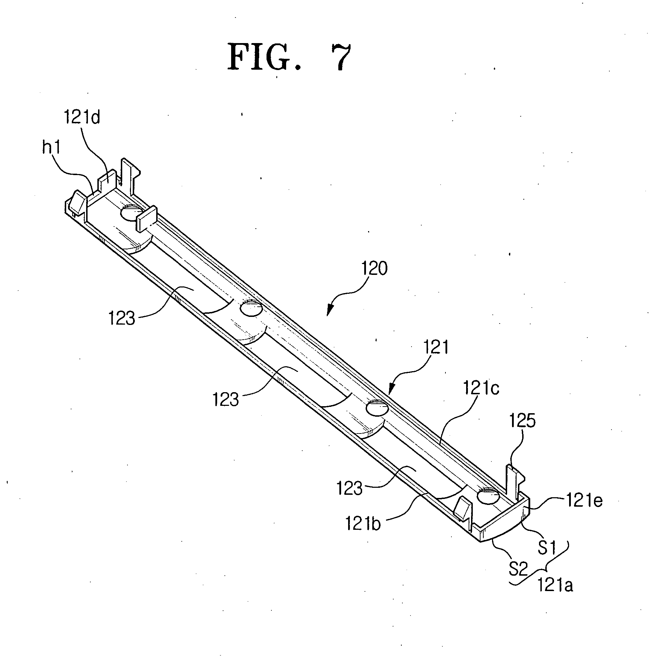

Referring now to Figure 7, the white member 120 is provided with an elongated member 121. The elongated member 121 has a base wall 121a. First and second sidewalls 121b, 121c are formed at respective ends of the base wall 121a opposite each other. Additionally, the white member 120 has first and second sidewalls 121d, 121e connecting the base wall 121a with the first and the second sidewalls 121b, 121c of the elongated member 121.

The base wall 121a has at least one opening 123 defined therein, so that the drive roller 130 can project through the opening 123 to contact the top surface D2 of a document D. In the present embodiment, the base wall 121a has three openings 123 which are defined at uniform intervals.

The base wall 121 has a scanning surface S1 extending along a direction perpendicular to the direction of travel of the document D to oppose the scanning point P1 of the image sensor unit 110, and a guide surface S2 upstream of the scanning surface along the document transport path. The guide surface S2 is connected with the first sidewall 121b of the elongated member 121. A part of the guide surface S2 is slanted. The slanted surface of the guide surface S2 guides the transport of the document which ingresses between the white member 120 and the image sensor unit 110. The openings 123 are formed in the slanted surface of the guide surface S2 so as to expose the drive roller 130 through the slanted surface.

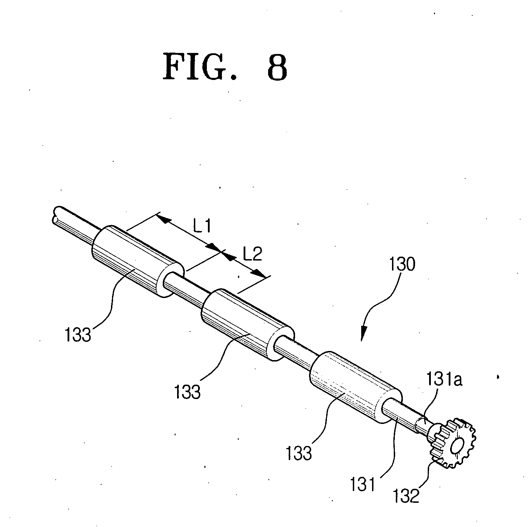

Each of the first sidewall 121b and the second sidewall 121c of the elongated member 121 is provided with a plurality of resilient hooks 125 at an upper portion thereof. The resilient hooks 125 are respectively locked into corresponding locking recesses 63a formed in the accommodating portion 63 (shown in Figure 3). Additionally, the first and the second sidewalls 121d, 121e of the white member 120 may be provided with the extra resilient hooks. At one end of the sidewalls 121d, 121e of the white member 120, a shaft recess h1 is formed through which the drive roller 130 (shown in Figure 8) passes. The base wall 121a and the first and the second sidewalls 121b, 121c of the elongated member 121, and the first and the second sidewalls 121d, 121e, of the white member 120, define a space which accommodates the drive roller 130 which is rotatable therein. The openings 123 are formed in the white member 120 so that the rollers 133 can contact a document D. Accordingly, the distance from the scanning surface S1 to the drive roller 130, i.e. the distance from the scanning point P1 to the drive roller 130, is optimized. A typical image sensor width is about 20mm. Thus, the distance between the scanning point P1 and the drive roller 130 can be optimized to be within 20mm.

Referring back to Figure 3, the white member 120 is urged toward the image sensor unit 110 by the elastic member 127 so as to maintain a constant gap between it and the image sensor unit 110 for normal scanning. The elastic member 127 is shown to be a coil spring which is fixed to and supported at a supporting boss 65 on the inner wall of the accommodating portion 63. However, it is to be understood that other arrangements which urge the white member 120 toward the image sensor unit 110 may be used.

The drive roller 130 is formed adjacent to the white member 120 on the document transport path. More specifically, the drive roller 130 is at an upstream ahead of the scanning surface S1 (shown in Figure 7) and is disposed to be rotated in contact with the second surface D2 of the document D. The drive roller 130 aligns the tip ends of the documents D picked up by the pickup roller 51, and delivers the document D to between the image sensor unit 110 and the white member 120 at a predetermined scanning speed.

Referring now to Figure 8, the drive roller 130 comprises the shaft 131, and a roller body 133 disposed along an outer circumference of the shaft 131. One end of the shaft 131 is connected with a drive gear 132. As explained above, the shaft 131 is rotatably supported by the shaft holder 64 in the accommodating portion 63 of the cover 60. A support portion 131a is formed around an end of the shaft 131, having a circumference less than that of the shaft 131 so that a location supported by the supporting member 64 is fixed. Accordingly, the support portion 131a stably rotates while being supported on the shaft holder 64, and the support portion 131a inhibits the drive roller 130 from moving in a lengthwise direction of the shaft 131. The roller body 133 is formed of an elastic material such as a rubber, and is fixed to the shaft 131 and rotates along with the shaft 131. A plurality of roller bodies 133 are formed at equal intervals. In other words, three roller bodies 133 are formed at the equal interval L2, each having a length L1 longer than the interval L2. The roller bodies 133 are respectively exposed outward through the corresponding openings 123 and rotated in contact with the transparent plate 111 of the image sensor unit 110. The drive gear 132 is connected to the connecting gear 54b (shown in Figure 3) and is rotated with the power transferred from the drive motor 53. The connecting gear 54b may be a clutch gear having a clutch function. Accordingly, the pickup roller 51 and the drive gear 130 (shown in Figure 3) can be rotated altogether or selectively.

As described above, since the drive roller 130 is disposed adjacent to the white member 120, a distance from the drive roller 130 to the scanning point P1 (hereinafter, refer to as "main gap") can be shortened to an optimum distance. As a result, problems occurring in the main gap, such as a skew of the document, or data location errors with respect to the document D such as speed error or left/right deviations can be reduced.

Also, by minimizing the main gap, damage to the document due to the pressure of the white member 120 is minimized. Since the drive roller 130 has a function of the conventional white roller which delivers a document D, the conventional idle roller can be omitted. As a result, a manufacturing cost is reduced and a product gets compact-sized due to the reduced number of parts.

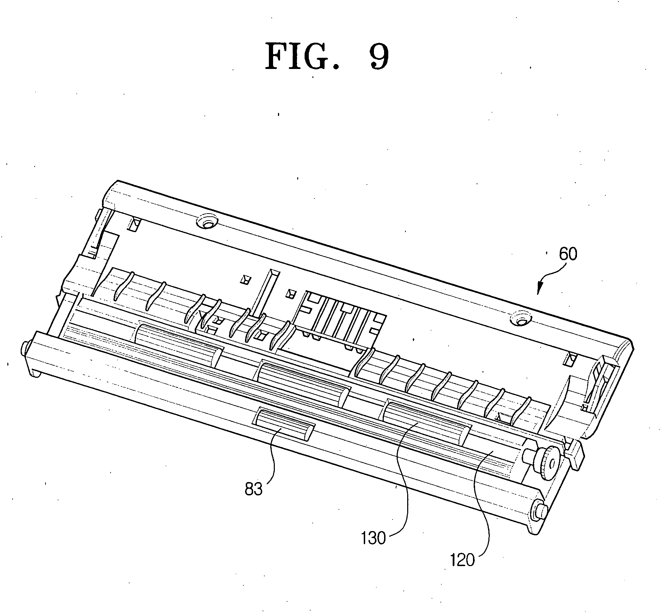

Referring now to Figures 3 and 9, the discharging unit 80 discharges the document which is passed through the image sensor unit 110 and the white member 120. The discharging unit 80 comprises a discharge roller 81 disposed on the main body 50, and an idle roller 83 rotating in mesh with the discharge roller 81. The discharge roller 83 is rotated by a power transferred from the drive motor 53 via the connecting gear 54a. The idle roller 83 is disposed in the cover 60, and is driven by a power transferred from the drive roller 130 via a power transfer roller 85. The idle roller 83 and the power transfer roller 85 are formed of a rubber material so that the power transfer roller 85 transfers the power of the drive roller 130 to the idle roller 83 by virtue of a frictional force. To this end, an outer circumference of the power transfer roller 85 is longer than a distance between the drive roller 130 and the idle roller 83, as shown in Figure 3, and the power transfer roller 85 is urged by an elastic member 87 toward the drive roller 130 and the idle roller 83. This configuration is applied since the drive roller 130 is disposed adjacent to the scanning point P1, and therefore, an additional gear train is not required.

The operation of a portion of the image scanning apparatus having the above structure is similar to that of the conventional image scanning apparatus, so a detailed description thereon is omitted. However, it takes less time for a document delivered by the drive roller 130 to reach the scanning point P1, and a distance for the same is reduced. Therefore, the probability of having errors is decreased.

In the image scanning unit having the above structure according to the present invention, the drive roller 130 is disposed adjacent to the white member 120 and opposite to the image sensor unit 110. Therefore, the white member 120 can provide a reliable white value, and the drive roller 130 functions to deliver the document D in place of the white roller 120. As a result, a distance from the drive roller 130 to the scanning point P1 of the image sensor unit 110 is greatly reduced to within an optimum distance range, i.e., 20mm, so that the scanning system can be compact and lightweight.

Another advantage is that the probability of a high-quality scanned image is increased, because errors which were mainly occurring in the main gap, such as a skew of the document D, or errors of the data location on the document D including transport speed error and left/right deviations, are reduced by optimizing the main gap between the drive roller 130 and the scanning point P1.

Yet another advantage is that a high-quality scan image can be obtained through a precise image compensation based on a reliable reference whiteness value which is provided by the white member 120.

Yet another advantage is that damage to the document D is prevented by minimizing the document pressing time and pressing area of the white member 120 through the minimized main gap between the drive roller 130 and the scanning point P1.

Although a few embodiments of the present invention have been shown and described, the present invention is not limited to the disclosed embodiments.

## Claims

1. A document scanning apparatus comprising an image sensor (111) and a reference white member (S1) aligned with the sensor (111) across a document path, **characterised by** a document driving roller (130) located beside the reference white member (S1).

2. An apparatus according to claim 1, wherein reference white member (S1) is partially interposed between a part of the roller (130) and the document path.

3. An apparatus according to claim 2, including a channel member (120) extending transversely across the document path, wherein the reference white member (S1) is comprises part of the outer surface of the floor of said channel member (120), at least, and the roller (130) projects through an aperture in said channel member (120) into the document path.

4. An image scanning unit comprising:
an image sensor unit disposed along a document delivery path and having an image scanning surface over which a document travels, the image scanning surface opposing a first surface of the document;
a white member which contacts a second side opposing the first side of the document and to urge the document toward the image sensor unit, a surface of the white member opposing the image sensor unit being white in color; and
a drive roller disposed along the document delivery path adjacent to the white member, delivering the document between the image sensor unit and the white member, and contacting the second side of the document.

5. The image scanning unit of claim 4, further comprising an elastic member which urges the white member toward the image sensor unit.

6. The image scanning unit of claim 4, wherein the white member comprises an elongated member having a contact surface which contacts the second side of the document and at least one opening which allows a part of the drive roller to pass therethrough and contact the second side of the document.

7. The image scanning unit of claim 6, wherein the elongated member comprises a base which includes:
a scanning surface opposing a scanning point of the image sensor unit and extending along a direction perpendicular to the document delivery path; and
a guide surface upstream of the scanning surface along the document delivery path and including the at least one opening.

8. The image scanning unit of claim 4, wherein the drive roller further comprises a plurality of roller bodies separately disposed on shaft at intervals.

9. The image scanning unit of claim 8, wherein the plurality of roller bodies are disposed at equal intervals, each of the plurality of roller bodies being longer than the intervals between them.

10. The image scanning unit of claim 4, wherein the drive roller is formed of a rubber material.

11. The image scanning unit of claim 4, wherein the surface of the white member opposing the image sensor unit comprises a metallic material coated in white.

12. The image scanning unit of claim 4, wherein the image scanning unit is a contact image sensor.

13. The image scanning unit of claim 4, wherein the white member is disposed at a scanning point of the image sensor unit.

14. The image scanning unit of claim 13, wherein a distance between the drive roller and the scanning point is optimized so that at least one of document skew and data location errors are minimized.

15. The image scanning unit of claim 14, wherein the distance is less than or equal to 20mm.

16. The image scanning unit of claim 4, wherein the white member provides a reference white value to the image scanning unit.

17. The image scanning unit of claim 16, wherein the reference white value is used to calibrate the image scanning unit.

18. The image scanning unit of claim 5, wherein the elastic member is a coil spring.

19. The image scanning unit of claim 5, wherein the elastic member urges the white member toward the image scanning unit so as to maintain a constant space between the white member and the image scanning unit during a scanning operation.

20. The image scanning unit of claim 4, wherein the drive roller is disposed upstream along the document delivery path.

21. The image scanning unit of claim 4, wherein the drive roller rotates at a constant speed.

22. The image scanning unit of claim 4, wherein the drive roller, upon rotation, delivers each sheet to a scanning position between the image scanning unit and the white member.

23. The image scanning unit of claim 4, wherein the drive roller is rotatably supported by a shaft holder which has an elastically-deformable open end which is elastically deformed when a shaft of the drive roller is inserted therein.

24. An image scanning apparatus, comprising:
a pickup roller unit disposed in a main body of the image scanning apparatus, which separates a document to be scanned sheet by sheet into one or more sheets, and feeds the one or more sheets to a document delivery path;
an image sensor unit disposed along the document delivery path to oppose a first side of each of the one or more sheets, each of the one or more sheets traveling over a scanning surface of the image sensor unit;
a white member which contacts a second side of each of the one or more sheets and to urge each of the one or more sheets toward the image sensor unit, a surface of the white member opposing the image sensor unit being white in color;
a drive roller disposed along the document delivery path adjacent to the white member, delivering each of the one or more sheets between the image sensor unit and the white member, and contacting the second side of each of the one or more sheets; and
a discharge unit which discharges each of the one or more sheets past between the image sensor unit and the white member to outside of the main body.

25. The image scanning apparatus of claim 24, further comprising a cover pivotably mounted on an upper portion of the main body which supports the white member and the drive roller.

26. The image scanning apparatus of claim 25, wherein the cover includes a downwardly recessed receiving portion which receives the white member and the drive roller.

27. The image scanning apparatus of claim 26, wherein a shaft portion protrudes from an inner bottom of the receiving portion to rotatably support the drive roller.

28. The image scanning apparatus of claim 26, further comprising an elastic member disposed in the receiving portion to urge the white member toward the image sensor unit.

29. The image scanning apparatus of claim 24, wherein the discharge unit comprises:
a discharge roller rotatably disposed in the main body, and driven by a driving motor; and
an idle roller rotatably disposed and in contact with the discharge roller, the idle roller being driven by the drive roller.

30. The image scanning apparatus of claim 29, wherein said discharge unit comprises:
a driving force transfer roller rotatably disposed in contact with the idle roller and the drive roller, respectively; and
an elastic member which urges the driving force transfer roller into contact with the idle roller and the drive roller so that a driving force of the drive roller is transferred through the driving force transfer roller to the idle roller.

31. An image scanning unit comprising:
an image sensor having a sensing surface disposed along a document delivery path which senses a side of a document passing over the sensing surface;
a white member having a white surface opposing the sensing surface which is sensable by the image sensor and which provides a white reference value, the white member being disposed along the document delivery path on a side opposing the side along which the image sensor is disposed; and
a drive roller disposed adjacent to and upstream of the white member along the document delivery path on the same side thereof as the white member, the drive roller feeding the 'document along the document delivery path.
